# EUROPEAN PATENT APPLICATION

(11) **EP 4 152 433 A1**
(43) Date of publication of application: **22.03.2023**
(21) Application number: 21805306.4
(22) Date of filing: 19.04.2021
(51) Int. Cl.: H01M 4/06, H01M 4/13, H01M 10/052, H01M 10/0562, H01M 10/0585, H01M 6/18, H01M 50/572

(54) **BATTERY**

(30) Priority: 12.05.2020 JP 2020083636
(71) Applicant: Panasonic Intellectual Property Management Co., Ltd., Osaka-shi, Osaka 540-6207 (JP)
(72) Inventor: KOGA, Eiichi, Osaka-shi, Osaka 540-6207 (JP)
(74) Representative: Eisenführ Speiser
(86) International application number: PCT/JP2021/015826
(87) International publication number: WO 2021/230009

(57) **Abstract**

A battery includes: a power generating element that includes a first electrode layer, a second electrode layer, and a solid electrolyte layer positioned between the first electrode layer and the second electrode layer; and an insulating member. A chamfered portion is provided at least in a part of corner portions of the power generating element. The insulating member covers at least a part of the chamfered portion.

## Description

### Technical Field

The present disclosure relates to a battery.

### Background Art

Patent Literature 1 discloses an electricity storage device that has an angled chamfered corner portion at an intersecting portion between a side surface and a bottom surface of an electrode assembly. Patent Literature 2 discloses a battery that includes an inclined portion and an exposed portion that exposes an end portion of a current collector, an active material layer being inclined toward the exposed portion in the inclined portion, and the inclined portion and the exposed portion being covered by an insulating member.

### Citation List

### Patent Literature

PTL 1: Japanese Unexamined Patent Application Publication No. 2015-32386
PTL 2: International Publication No. 2015-064586

### Summary of Invention

### Technical Problem

Highly reliable batteries have hitherto been desired.

Thus, the present disclosure provides a highly reliable battery.

### Solution to Problem

An aspect of the present disclosure provides a battery including: a power generating element that includes a first electrode layer, a second electrode layer, and a solid electrolyte layer positioned between the first electrode layer and the second electrode layer; and an insulating member, in which a chamfered portion is provided at least in a part of corner portions of the power generating element, and the insulating member covers at least a part of the chamfered portion.

### Advantageous Effects of Invention

According to the present disclosure, it is possible to provide a highly reliable battery.

### Brief Description of Drawings

[Fig. 1A] Fig. 1A is a side view illustrating a schematic configuration of a battery according to an embodiment.
[Fig. 1B] Fig. 1B is a top view illustrating a schematic configuration of the battery according to the embodiment.
[Fig. 1C] Fig. 1C illustrates a method of forming chamfered portions according to the embodiment.
[Fig. 2A] Fig. 2A is a side view illustrating a schematic configuration of a battery according to a first modification of the embodiment.
[Fig. 2B] Fig. 2B is a top view illustrating a schematic configuration of the battery according to the first modification of the embodiment.
[Fig. 3A] Fig. 3A is a side view illustrating a schematic configuration of a battery according to a second modification of the embodiment.
[Fig. 3B] Fig. 3B is a top view illustrating a schematic configuration of the battery according to the second modification of the embodiment.
[Fig. 4A] Fig. 4A is a side view illustrating a schematic configuration of a battery according to a third modification of the embodiment.
[Fig. 4B] Fig. 4B is a top view illustrating a schematic configuration of the battery according to the third modification of the embodiment.
[Fig. 5A] Fig. 5A is a side view illustrating a schematic configuration of a battery according to a fourth modification of the embodiment.
[Fig. 5B] Fig. 5B is a top view illustrating a schematic configuration of the battery according to the fourth modification of the embodiment.
[Fig. 6A] Fig. 6A is a side view illustrating a schematic configuration of a battery according to a fifth modification of the embodiment.
[Fig. 6B] Fig. 6B is a top view illustrating a schematic configuration of the battery according to the fifth modification of the embodiment.
[Fig. 7A] Fig. 7A is a side view illustrating a schematic configuration of a battery according to a sixth modification of the embodiment.
[Fig. 7B] Fig. 7B is a top view illustrating a schematic configuration of the battery according to the sixth modification of the embodiment.
[Fig. 8A] Fig. 8A is a side view illustrating a schematic configuration of a battery according to a seventh modification of the embodiment.
[Fig. 8B] Fig. 8B is a top view illustrating a schematic configuration of the battery according to the seventh modification of the embodiment.
[Fig. 9A] Fig. 9A is a side view illustrating a schematic configuration of a battery according to an eighth modification of the embodiment.
[Fig. 9B] Fig. 9B is a top view illustrating a schematic configuration of the battery according to the eighth modification of the embodiment.

### Description of Embodiments

### (Overview of Present Disclosure)

An aspect of the present disclosure provides a battery including: a power generating element that includes a first electrode layer, a second electrode layer, and a solid electrolyte layer positioned between the first electrode layer and the second electrode layer; and an insulating member, in which a chamfered portion is provided at least in a part of corner portions of the power generating element, and the insulating member covers at least a part of the chamfered portion.

Consequently, it is possible to suppress contact of foreign matter at the corner portions of the power generating element, since the corner portions of the power generating element are covered by the insulating member. In addition, the insulating member functions also as a protection member and a buffer member for the corner portions of the power generating element, which tend to be deformed during handling of the battery to incur a failure such as a short circuit. In addition, the corner portions are easily covered by the insulating member compared to corner portions at which no chamfered portion is provided, since the insulating member covers the chamfered portion with reduced surface energy. Therefore, it is possible to achieve a battery with high reliability.

For example, the power generating element may be in a rectangular parallelepiped shape.

Consequently, it is possible to achieve a battery in which the corner portions of the power generating element in a rectangular parallelepiped shape are protected.

For example, the chamfered portion may be positioned at each of four corners of the rectangular parallelepiped when the power generating element is viewed in plan.

Consequently, the four corners of the rectangular parallelepiped, at which deformation and separation particularly tend to be caused by handling of the battery, an impact, etc., are covered by the insulating member. Therefore, occurrence and progress of separation and deformation due to an impact etc. at the four corners of the rectangular parallelepiped can be suppressed. Hence, it is possible to achieve a battery with higher reliability.

For example, the chamfered portion may be inclined with respect to a laminating direction of the power generating element.

Consequently, the distance on the surface of the power generating element between the principal surface of the power generating element on the side of the first electrode layer and the principal surface thereof on the side of the second electrode layer is increased at the location at which the chamfered portion is provided. Hence, a portion of the power generating element in the vicinity of the principal surface on the side of the first electrode layer and a portion thereof in the vicinity of the principal surface on the side of the second electrode layer are not easily brought into contact with each other, which can suppress a short circuit. Hence, it is possible to achieve a battery with higher reliability.

For example, the chamfered portion may be a curved surface.

As the chamfered portion is a curved surface in this manner, the surface area is increased compared to the case where the same range is chamfered such that the chamfered portion is a flat surface, which makes it easier to cover the chamfered portion using the insulating member.

For example, the first electrode layer may include a current collector, and an active material layer positioned between the current collector and the solid electrolyte layer; the chamfered portion may be provided over the current collector and the active material layer; and the insulating member may cover the current collector and the active material layer at the chamfered portion.

Consequently, the current collector and the active material layer are collectively covered by the insulating member. Therefore, occurrence and progress of separation between the current collector and the active material layer due to hot-cold cycles, an external impact, etc. are suppressed, which improves resistance to hot-cold cycles and impact resistance.

For example, the chamfered portion may be provided over the current collector, the active material layer, and the solid electrolyte layer; and the insulating member may cover the current collector, the active material layer, and the solid electrolyte layer at the chamfered portion.

Consequently, the current collector, the active material layer, and the solid electrolyte layer are collectively covered by the insulating member. Therefore, occurrence and progress of separation between the current collector and the active material layer and separation between the active material layer and the solid electrolyte layer due to hot-cold cycles, an external impact, etc. are suppressed, which further improves resistance to hot-cold cycles and impact resistance.

For example, the insulating member may cover the chamfered portion to an outer side of an outer periphery of the chamfered portion.

Consequently, the insulating member is provided to extend to at least one of the upper surface and a side surface of the power generating element, and therefore the sealing performance of the insulating member for the outer peripheral portion of the chamfered portion and the securing performance between the insulating member and the power generating element are improved.

For example, the insulating member may be softer than the first electrode layer, the solid electrolyte layer, and the second electrode layer.

Consequently, a stress generated at the interface between the insulating member and the chamfered portion due to a thermal stress and an impact is easily absorbed by the insulating member, and therefore the power generating element can be protected effectively. Hence, it is possible to achieve a battery with higher reliability.

For example, the insulating member may contain a resin.

Since the insulating member contains a resin that can be applied and cured, the insulating member that covers the chamfered portion can be formed easily.

For example, the insulating member may include a structure in which a plurality of insulating films are laminated on each other.

Consequently, as the insulating member includes a structure in which a plurality of insulating films are laminated on each other, the insulating member is not easily separated from the chamfered portion when the insulating member is cured to be formed since a plurality of thin insulating films are laminated on the chamfered portion, in contrast to the case where a single layer with the same thickness is formed as the insulating member. In addition, a precise insulating member is formed, as a defect such as a hole and a thin portion due to irregularities in thickness is not easily caused in the insulating member. Hence, it is possible to achieve a battery with higher reliability.

For example, types of materials contained in each of the plurality of insulating films are different from each other.

Consequently, a highly functional insulating member can be achieved by combining the properties of the plurality of insulating films containing different kinds of materials.

For example, respective hardnesses of the plurality of insulating films may be determined such that an insulating film that is closer to the chamfered portion, among the plurality of insulating films, has a lower hardness.

Consequently, the insulating film which is relatively soft is positioned close to the chamfered portion of the power generating element. Therefore, even if the power generating element is expanded and contracted because of hot-cold cycles or charging and discharging, the insulating film is easily deformed to be expanded and contracted in a following manner, and the insulating member is not easily separated from the chamfered portion. Hence, it is possible to achieve a battery with higher reliability.

For example, the power generating element may include a structure in which a plurality of unit cells are laminated on each other, the unit cells each including the first electrode layer, the solid electrolyte layer, and the second electrode layer.

Consequently, it is possible to achieve a high-capacity or high-voltage battery of a laminated type with high reliability.

For example, the solid electrolyte layer may contain a solid electrolyte that has lithium ion conductivity.

Consequently, it is possible to achieve a lithium-ion battery containing a solid electrolyte and with high reliability.

An embodiment will be specifically described below while referring to the drawings.

The embodiment to be described below indicates a generic or specific example. The numerical values, shapes, materials, constituent elements, arrangement, position, and mode of connection of the constituent elements, etc. indicated in the following embodiment are exemplary, and are not intended to limit the present disclosure. Of the constituent elements in the following embodiment, constituent elements not defined in the independent claim which indicates the highest concept are described as optional constituent elements.

Herein, the terms that indicate the relationship between elements such as "parallel", the terms that indicate the shape of elements such as "rectangular parallelepiped", and the numerical ranges do not only represent the exact meanings of the expressions, but also represent substantially equivalent ranges including differences of several percent, for example.

The drawings are not necessarily exact illustrations. In the drawings, substantially identical components are denoted by like reference numerals to omit or simplify redundant description.

Herein and in the drawings, the x axis, the y axis, and the z axis indicate three axes of a three-dimensional orthogonal coordinate system. In the embodiment, the z-axis direction is defined as the thickness direction of a battery. The language "thickness direction" as used herein refers to a direction that is perpendicular to a plane on which layers are laminated, unless specifically stated otherwise.

The language "as viewed in plan" as used herein means that the battery is seen along the laminating direction of the power generating element, and the language "thickness" as used herein indicates the length of the power generating element and each layer in the laminating direction, unless specifically stated otherwise.

The terms "above" and "below" as used herein for the components of the battery do not indicate the upper direction (vertically upper) and the lower direction (vertically lower) in the absolute space recognition, and are used as terms prescribed in accordance with the relative positional relationship which is based on the laminated order of the laminated components. The terms "above" and "below" are applied not only in the case where two constituent elements are disposed in close contact with each other, but also in the case where two constituent elements are disposed with a space therebetween and with another constituent element present between the two constituent elements.

### (Embodiment)

### [Configuration of Battery]

First, the configuration of a battery according to an embodiment will be described.

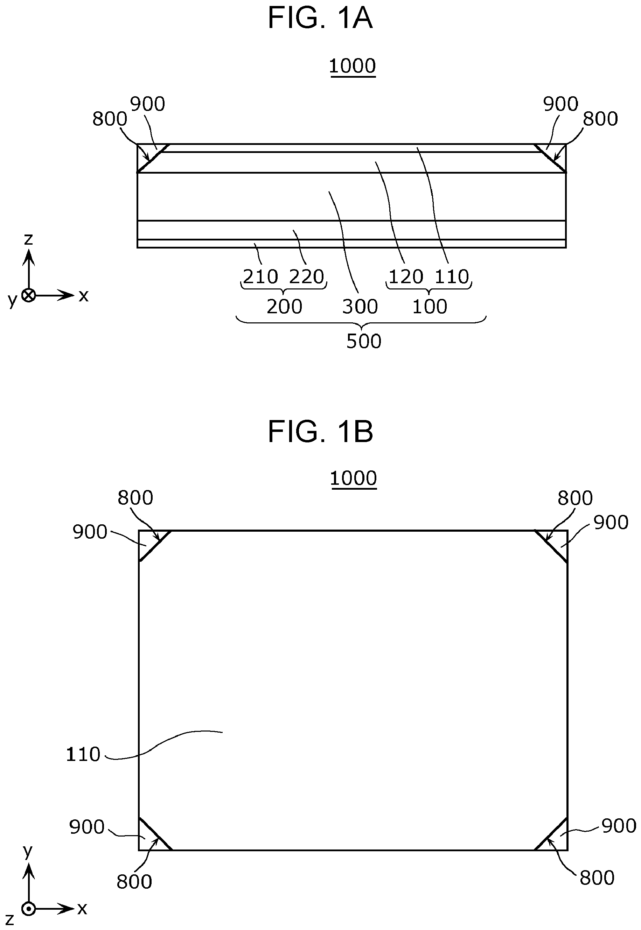

Fig. 1A is a side view illustrating a schematic configuration of a battery 1000 according to the present embodiment. Specifically, Fig. 1A is a side view of the battery 1000 as seen from the negative side in the y-axis direction. Fig. 1B is a top view illustrating a schematic configuration of the battery 1000 according to the present embodiment. Specifically, Fig. 1B is a plan view of the battery 1000 as seen from the positive side in the z-axis direction.

As illustrated in Figs. 1A and 1B, the battery 1000 includes a power generating element 500 that includes an electrode layer 100, a counter electrode layer 200, and a solid electrolyte layer 300 positioned between the electrode layer 100 and the counter electrode layer 200, and an insulating member 900. A chamfered portion 800 is provided at the corner portions of the power generating element 500. In other words, the power generating element 500 has chamfered portions 800 at least in a part of the corner portions of the power generating element 500. The insulating member 900 covers the chamfered portions 800, and is in contact with the chamfered portions 800. The battery 1000 is an all-solid-state battery, for example. The electrode layer 100 is an example of a first electrode layer. The counter electrode layer 200 is an example of a second electrode layer.

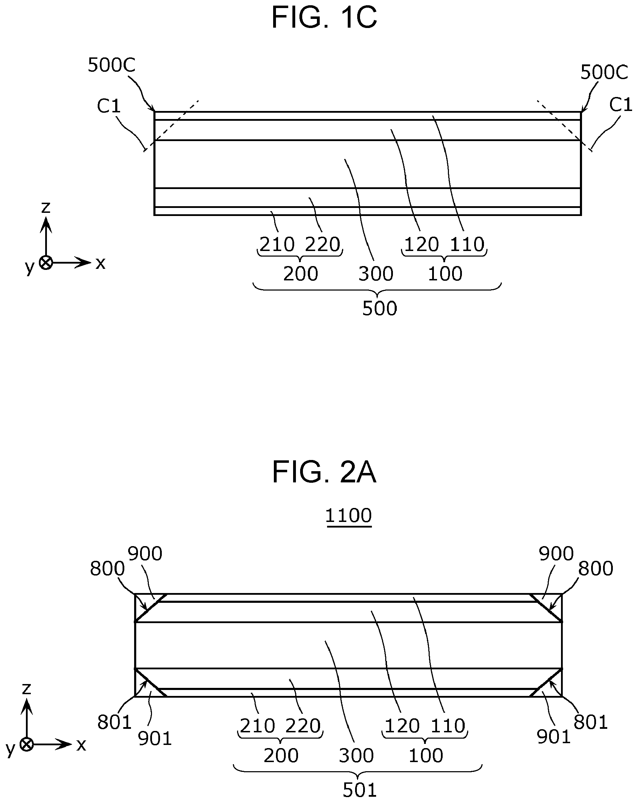

Fig. 1C illustrates a method of forming the chamfered portions 800. Fig. 1C illustrates a side surface of the power generating element 500 before being chamfered. The chamfered portions 800 are surfaces to be newly exposed at the corner portions of the power generating element 500 by cutting the power generating element 500 at the positions of broken lines C1, that is, chamfering the power generating element 500 at the positions of the broken lines C1. Consequently, portions of the power generating element 500 including vertexes 500C are removed. The battery 1000 illustrated in Figs. 1A and 1B is formed by covering the thus formed chamfered portions 800 using the insulating member 900. The chamfered portions 800 may be surfaces newly exposed at corner portions of the power generating element 500 by chamfering the power generating element 500 so as to remove portions of the power generating element 500 including ridge lines.

The constituent elements of the battery 1000 will be described in detail below with reference to Figs. 1A and 1B again.

The power generating element 500 has a structure in which the electrode layer 100, the solid electrolyte layer 300, and the counter electrode layer 200 are laminated in this order. More particularly, the power generating element 500 has a structure in which an electrode current collector 110, an electrode active material layer 120, the solid electrolyte layer 300, a counter electrode active material layer 220, and a counter electrode current collector 210 are laminated in this order. The power generating element 500 is in the shape of a rectangular parallelepiped. The shape of the power generating element 500 is not limited to a rectangular parallelepiped shape, and may be a different shape such as a circular column shape or a polygonal column shape. The language "in a rectangular parallelepiped shape" as used herein means to be roughly in a rectangular parallelepiped shape, and includes the concept of being in a chamfered rectangular parallelepiped shape. The same also applies to other expressions of shapes used herein.

The power generating element 500 is in contact with the insulating member 900 at the chamfered portions 800. The side surfaces and the principal surfaces (i.e. the upper surface and the lower surface) of the power generating element 500 are not covered by the insulating member 900, and are not in contact with the insulating member 900. It is only necessary that, of the surfaces of the power generating element 500, at least a part of the range, e.g. a half or more of the range, of the side surfaces and the principal surfaces of the power generating element 500 should not be covered by the insulating member 900. The side surfaces and the principal surfaces of the power generating element 500 may include a range covered by the insulating member 900 and a range not covered by the insulating member 900.

The electrode layer 100 includes the electrode current collector 110 and the electrode active material layer 120 which is positioned between the electrode current collector 110 and the solid electrolyte layer 300. The electrode current collector 110 is an example of a current collector. The electrode active material layer 120 is an example of an active material layer. The electrode active material layer 120 is in contact with a surface of the electrode current collector 110 on the side of the solid electrolyte layer 300.

A different layer such as a joint layer constituted from an electrically conductive material may be provided between the electrode current collector 110 and the electrode active material layer 120. The electrode layer 100 may not include the electrode current collector 110, and a current collector of a different electrode layer 100 or counter electrode layer 200, an electrode for takeout, a substrate that supports the battery 1000, etc. may function as a current collector for the electrode active material layer 120. That is, the electrode layer 100 may include only the electrode active material layer 120, of the electrode current collector 110 and the electrode active material layer 120.

The counter electrode layer 200 is disposed to face the electrode layer 100 via the solid electrolyte layer 300, and serves as a counter electrode for the electrode layer 100. The counter electrode layer 200 includes the counter electrode current collector 210 and the counter electrode active material layer 220 which is positioned between the counter electrode current collector 210 and the solid electrolyte layer 300. The counter electrode active material layer 220 is in contact with a surface of the counter electrode current collector 210 on the side of the solid electrolyte layer 300.

A different layer such as a joint layer constituted from an electrically conductive material may be provided between the counter electrode current collector 210 and the counter electrode active material layer 220. The counter electrode layer 200 may not include the counter electrode current collector 210, and a current collector of a different electrode layer 100 or counter electrode layer 200, an electrode for takeout, a substrate that supports the battery 1000, etc. may function as a current collector for the counter electrode active material layer 220. That is, the counter electrode layer 200 may include only the counter electrode active material layer 220, of the counter electrode current collector 210 and the counter electrode active material layer 220.

In the present embodiment, one of the electrode layer 100 and the counter electrode layer 200 is a positive electrode layer that includes a positive electrode active material layer and a positive electrode current collector as the electrode active material layer 120 and the electrode current collector 110, respectively, and the other thereof is a negative electrode layer that includes a negative electrode active material layer and a negative electrode current collector as the counter electrode active material layer 220 and the counter electrode current collector 210, respectively, for example. Hereinafter, the positive electrode active material layer and the negative electrode active material layer will occasionally be referred to simply as "active material layers". The positive electrode current collector and the negative electrode current collector will occasionally be referred to simply as "current collectors".

The positive electrode active material layer contains at least a positive electrode active material. That is, the positive electrode active material layer is a layer mainly constituted from a positive electrode material such as a positive electrode active material. The positive electrode active material is a substance with a crystal structure to which metal ions such as lithium (Li) or magnesium (Mg) are inserted or from which such ions are dissociated at a potential higher than the negative electrode, the substance being oxidized or reduced accordingly. The type of the positive electrode active material may be selected as appropriate in accordance with the type of the battery, and a known positive electrode active material may be used. Examples of the positive electrode active material include a compound containing lithium and a transition metal element, and more specifically include an oxide containing lithium and a transition metal element and a phosphate compound containing lithium and a transition metal element. Examples of the oxide containing lithium and a transition metal element include a lithium nickel composite oxide such as LiNiₓM₁₋ₓO₂ (where M is at least one element of Co, Al, Mn, V, Cr, Mg, Ca, Ti, Zr, Nb, Mo, and W and x meets 0 < x ≤ 1), a layered oxide such as lithium cobalt oxide (LiCoO₂), lithium nickel oxide (LiNiO₂), and lithium manganese oxide (LiMn₂O₄), lithium manganese oxide (LiMn₂O₄, Li₂MnO₃, LiMO₂) having a spinel structure, etc. Examples of the phosphate compound containing lithium and a transition metal element include lithium iron phosphate (LiFePO₄) having an olivine structure. Sulfur (S) and a sulfide such as lithium sulfide (Li₂S) may also be used for the positive electrode active material. In such a case, positive electrode active material particles coated with lithium niobate (LiNbO₃) or to which lithium niobate (LiNbO₃) has been added may be used as the positive electrode active material. Only one kind of these materials may be used, or two or more kinds of these materials may be used in combination, for the positive electrode active material.

As discussed above, it is only necessary that the positive electrode active material layer should contain at least a positive electrode active material. The positive electrode active material layer may be a mixture layer constituted from a mixture of a positive electrode active material and a different additive material. Examples of the additive material include a solid electrolyte such as an inorganic solid electrolyte or a sulfide solid electrolyte, a conductive assistant such as acetylene black, a binder for binding such as a polyethylene oxide or a polyvinylidene fluoride, etc. The positive electrode active material layer improves ion conductivity within the positive electrode active material layer and also improves electron conductivity when a positive electrode active material and a different additive material such as a solid electrolyte or a conductive assistant are mixed at predetermined proportions. Examples of the solid electrolyte include a solid electrolyte mentioned as an example of the solid electrolyte of the solid electrolyte layer 300 to be discussed later.

The thickness of the positive electrode active material layer may be greater than or equal to 5 µm and less than or equal to 300 µm, for example.

The negative electrode active material layer contains at least a negative electrode active material. That is, the negative electrode active material layer is a layer mainly constituted from a negative electrode material such as a negative electrode active material. The negative electrode active material refers to a substance with a crystal structure to which metal ions such as lithium (Li) or magnesium (Mg) are inserted or from which such ions are dissociated at a potential lower than the positive electrode, the substance being oxidized or reduced accordingly. The type of the negative electrode active material may be selected as appropriate in accordance with the type of the battery, and a known negative electrode active material may be used. Examples of the negative electrode active material include a carbon material such as natural graphite, artificial graphite, graphite carbon fibers, and resin-heat-treated carbon, an alloy-based material to be mixed with a solid electrolyte, etc. Examples of the alloy-based material include a lithium alloy such as LiAl, LiZn, Li₃Bi, LisCd, Li₃Sb, Li₄Si, Li_{4.4}Pb, Li_{4.4}Sn, Li_{0.17}C, and LiCe, an oxide of lithium and a transition metal element such as lithium titanate (Li₄Ti₅O₁₂), a metal oxide such as zinc oxide (ZnO) and silicon oxide (SiOₓ), etc. Only one kind of these materials may be used, or two or more kinds of these materials may be used in combination, for the negative electrode active material.

As discussed above, it is only necessary that the negative electrode active material layer should contain at least a negative electrode active material. The negative electrode active material layer may be a mixture layer constituted from a mixture of a negative electrode active material and a different additive material. Examples of the additive material include a solid electrolyte such as an inorganic solid electrolyte or a sulfide solid electrolyte, a conductive assistant such as acetylene black, a binder for binding such as a polyethylene oxide or a polyvinylidene fluoride, etc. The negative electrode active material layer improves ion conductivity within the negative electrode active material layer and also improves electron conductivity when a negative electrode active material and a different additive material such as a solid electrolyte or a conductive assistant are mixed at predetermined proportions. Examples of the solid electrolyte include a solid electrolyte mentioned as an example of the solid electrolyte of the solid electrolyte layer 300 to be discussed later.

The thickness of the negative electrode active material layer may be greater than or equal to 5 µm and less than or equal to 300 µm, for example.

It is only necessary that the current collectors should be formed from an electrically conductive material, and the material of the current collectors is not specifically limited. The current collectors may be a foil-like body, a plate-like body, or a mesh-like body made of stainless steel, nickel, aluminum, iron, titanium, copper, palladium, gold, and platinum, an alloy of two or more kinds thereof, etc., for example. The material of the current collectors may be selected as appropriate so that the current collectors will not be melted or decomposed in a manufacturing process or at the temperature of use or the pressure of use, and in consideration of the battery operation potential applied to the current collectors and electrical conductivity. The material of the current collectors may also be selected in accordance with the required tensile strength and thermal resistance. The current collectors may be a clad material obtained by laminating high-strength electrolytic copper foils or different kinds of metal foils.

The thickness of the current collectors may be greater than or equal to 10 µm and less than or equal to 100 µm, for example.

The solid electrolyte layer 300 is positioned between the electrode active material layer 120 and the counter electrode active material layer 220. The solid electrolyte layer 300 is in contact with the lower surface of the electrode active material layer 120 and the upper surface of the counter electrode active material layer 220.

The solid electrolyte layer 300 contains at least a solid electrolyte. It is only necessary that the solid electrolyte should be a solid electrolyte for a battery having ion conductivity known in the art, and the solid electrolyte may be a solid electrolyte that conducts metal ions such as lithium ions and magnesium ions, for example. The solid electrolyte may be selected as appropriate in accordance with the type of ions to be conducted, and may be an inorganic solid electrolyte such as a sulfide solid electrolyte or an oxide solid electrolyte, for example. Examples of the sulfide solid electrolyte include lithium-containing sulfides such as Li₂S-P₂S₅, Li₂S-SiS₂, Li₂S-B₂S₃, Li₂S-GeS₂, Li₂S-SiS₂-LiI, Li₂S-SiS₂-Li₃PO₄, Li₂S-Ge₂S₂, Li₂S-GeS₂-P₂S₅, Li₂S-GeS₂-ZnS, etc. Examples of the oxide solid electrolyte include lithium-containing metal oxides such as Li₂O-SiO₂ and Li₂O-SiO₂-P₂O₅, lithium-containing metal nitrides such as LiₓP_{y}O_{1-z}N_{z}, lithium phosphate (Li₃PO₄), lithium-containing transition metal oxides such as a lithium titanium oxide, etc. Only one kind of these materials may be used, or two or more kinds of these materials may be used in combination, for the solid electrolyte.

The solid electrolyte layer 300 may contain a binder for binding such as a polyethylene oxide or a polyvinylidene fluoride etc. in addition to the solid electrolyte described above.

The thickness of the solid electrolyte layer 300 may be greater than or equal to 5 µm and less than or equal to 150 µm, for example.

The solid electrolyte layer 300 may be constituted as an aggregate of particles of the solid electrolyte. Alternatively, the solid electrolyte layer 300 may be constituted as a sintered organization of the solid electrolyte.

The chamfered portion 800 is positioned at each of the four corners of a rectangular parallelepiped when the power generating element 500 in a rectangular parallelepiped shape is viewed in plan. Specifically, the chamfered portion 800 is positioned at the four corners of the upper surface of the power generating element 500. The power generating element 500 is provided with four chamfered portions 800. The number of the chamfered portions 800 is not limited to four, and may be greater than or equal to one and less than or equal to three, and may be greater than or equal to five.

The chamfered portions 800 are provided in the electrode layer 100 of the power generating element 500, and specifically provided over the electrode current collector 110 and the electrode active material layer 120. The chamfered portions 800 are not provided in the solid electrolyte layer 300. The chamfered portions 800 are covered by the insulating member 900. The chamfered portions 800 are flat surfaces inclined with respect to the laminating direction of the power generating element 500. As the chamfered portions 800 inclined with respect to the laminating direction are provided over the electrode current collector 110 and the electrode active material layer 120, the distance between the principal surface (i.e. upper surface) of the power generating element 500 on the side of the electrode layer 100 and the principal surface (i.e. lower surface) of the power generating element 500 on the side of the counter electrode layer 200, specifically the distance between the electrode current collector 110 and the counter electrode current collector 210, is increased. This suppresses a short circuit due to contact between the electrode current collector 110 and the counter electrode current collector 210. Further, a short circuit is suppressed better as the chamfered portions 800 are covered by the insulating member 900.

In the case where the power generating element 500 has a rectangular shape of 150 mm by 100 mm as viewed in plan, the power generating element 500 has a thickness of about 200 µm, and the power generating element 500 includes the electrode current collector 110 which is constituted from a copper foil with a thickness of about 15 µm, for example, the chamfered portions 800 are formed by cutting the power generating element 500 for the thickness of the electrode current collector 110 or greater, i.e. for about 15 µm or greater, from the upper surface of the power generating element 500. As the chamfered portions 800 inclined with respect to the laminating direction are provided over the electrode current collector 110 and the electrode active material layer 120 in this manner, end portions of the electrode current collector 110 at the chamfered portions 800 are positioned as retracted inward from the side surfaces of the power generating element 500 as viewed in plan. Further, the end portions of the electrode current collector 110 are covered by the insulating member 900. This suppresses a short circuit, since the electrode current collector 110 is not likely to contact other members. The range in which the chamfered portions 800 are provided is set so as not to significantly decrease the volume of the power generating element 500, for example, from the viewpoint of battery capacity. The volume of the power generating element 500 to be decreased by providing the chamfered portions 800 may be less than or equal to 3% of the volume of the power generating element 500 before the chamfered portions 800 are provided, may be less than or equal to 1%, and may be less than or equal to 0.5%, for example.

The chamfered portions 800 may be provided in only the electrode current collector 110. This reduces the effect on the battery capacity. Alternatively, the chamfered portions 800 may be extended to the solid electrolyte layer 300, in addition to the electrode current collector 110 and the electrode active material layer 120, for the purpose of improving reliability etc. in such a range that no problem will be caused in terms of manufacture or battery characteristics.

The chamfered portions 800 are not provided in the counter electrode layer 200. As the chamfered portions 800 are provided in only the electrode layer 100 in this manner, the polarity of the battery 1000 can be distinguished on the basis of the appearance thereof. Therefore, occurrence of a failure in electrical connection due to assembly with the wrong polarity is suppressed, even if work or a process of distinguishing polarity is not performed, in the case where a module etc. integrating the battery is fabricated.

The surface roughness (Rz) of the chamfered portions 800 in contact with the insulating member 900 is greater than or equal to 1 µm and less than or equal to 10 µm, for example. As fine irregularities are present on the chamfered portions 800 in this manner, the area of joint between the chamfered portions 800 and the insulating member 900 is increased, and the anchor effect is obtained between the chamfered portions 800 and the insulating member 900. Therefore, the strength of joint between the chamfered portions 800 and the insulating member 900 is improved. For example, fine irregularities with a surface roughness (Rz) of greater than or equal to 1 µm and less than or equal to 2 µm can be formed by polishing the chamfered portions 800 using #1200 polishing paper. Meanwhile, fine irregularities with a surface roughness (Rz) of greater than or equal to 3 µm and less than or equal to 5 µm can be formed by polishing the chamfered portions 800 using #800 polishing paper, for example. The surface roughness (Rz) of the chamfered portions 800 in contact with the insulating member 900 may be greater than or equal to 3 µm and less than or equal to 10 µm. This allows surface energy to be dispersed, which improves the wettability between the chamfered portions 800 and the insulating member 900 to make it unlikely that the insulating member 900 is repelled by the chamfered portions 800. Therefore, effects such as reducing the area of the chamfered portions 800 and accurately applying the insulating member 900 to a desired application area are obtained.

The insulating member 900 is joined to the power generating element 500. Specifically, the insulating member 900 covers the chamfered portions 800, and is joined to the electrode layer 100 of the power generating element 500 through the chamfered portions 800. The insulating member 900 individually covers the chamfered portions 800 at the four corners of the power generating element 500 in a plan view of the power generating element 500. That is, the battery 1000 is provided with four insulating members 900. Some of the chamfered portions 800 at the four corners may not be covered by the insulating member 900.

At each of the chamfered portions 800, the insulating member 900 collectively covers respective end portions of the electrode current collector 110 and the electrode active material layer 120 exposed to the chamfered portion 800 to be joined to the electrode current collector 110 and the electrode active material layer 120. This makes it unlikely that the electrode current collector 110 and the electrode active material layer 120 are separated from each other. The insulating member 900 can suppress contact between an active material raw material and foreign matter by covering the electrode active material layer 120. Further, the insulating member 900 can suppress a short circuit with the counter electrode layer 200 and characteristic degradation due to separation of powder of the active material raw material, or so-called powder dropping, by covering the electrode active material layer 120. The insulating member 900 is formed by being applied to the chamfered portions 800, for example. The shape of the insulating member 900 is not specifically limited as long as the insulating member 900 covers the chamfered portions 800, and the insulating member 900 may be in a block shape or a film shape.

The insulating member 900 covers the entirety surface of each of the chamfered portions 800. The insulating member 900 covers only the chamfered portions 800, of the surfaces of the power generating element 500. It is only necessary that the insulating member 900 should be able to insulate the corner portions (i.e. the chamfered portions 800), at which deformation and separation tend to occur, of the power generating element 500 by covering the corner portions of the power generating element 500. The insulating member 900 may cover only a part of the range of the chamfered portions 800, and may cover the power generating element 500 for a range wider than the chamfered portions 800. For example, the insulating member 900 may cover ridge lines from the electrode layer 100 to the counter electrode layer 200. Consequently, the effect of suppressing separation of the layers of the power generating element 500 is obtained.

For example, when a battery which is not provided with the chamfered portions 800 of the battery 1000 and in which the corner portions of the power generating element 500 are not covered by the insulating member 900 is placed on a hot plate heated to 100°C as a comparative example, the upper current collector starts separation at the outer periphery because of a thermal stress after the lapse of five minutes. When the battery 1000 according to the present embodiment is placed on a similar hot plate, on the other hand, separation of the current collector is not caused, and the effect of suppressing separation is observed.

It is only necessary that the material of the insulating member 900 should be an electrically insulating material. The insulating member 900 contains a resin, for example. The insulating member 900 contains an insulating resin as a main component, for example. Examples of the resin include an epoxy resin, an acrylic resin, a polyimide resin, silsesquioxane, etc. Specifically, the insulating member 900 may be an applicable resin such as a liquid or powder thermosetting epoxy resin, for example. The insulating member 900 can be joined to the chamfered portions 800 so as to cover the chamfered portions 800 by applying such an applicable resin in a liquid or powder form to the chamfered portions 800 and thermally curing the resin.

The insulating member 900 may be softer than any of the constituent members of the power generating element 500, specifically the electrode layer 100, the counter electrode layer 200, and the solid electrolyte layer 300, for example. Consequently, the power generating element 500 can be protected by absorbing an impact etc. applied to portions provided with the chamfered portions 800 covered by the insulating member 900. Also in an environment of hot-cold cycles, in addition, a stress that acts on the interface between the insulating member 900 and the chamfered portions 800 due to the difference between the respective thermal expansion rates of the insulating member 900 and the power generating element 500 is absorbed by the relatively soft insulating member 900. Therefore, an adverse effect on the structure of the layers of the battery 1000 such as occurrence of a crack can be suppressed. The Young's modulus of the insulating member 900 may be greater than or equal to 10 GPa and less than or equal to 40 GPa, for example. Specifically, an epoxy resin with a Young's modulus in such a range may be used for the insulating member 900. The battery 1000 can be protected appropriately by using the insulating member 900 with such a Young's modulus.

A comparison can be made for the relative relationship between the respective softnesses (e.g. elastic modulus such as Young's modulus) of the constituent members of the power generating element 500 and the insulating member 900 by applying a rigid penetrator as in Vickers hardness measurement and comparing the size of the trace of the penetrator. For example, the insulating member 900 is softer than any of the constituent members of the power generating element 500 in the case where the insulating member 900 is recessed more significantly than any of the constituent members of the power generating element 500 when the penetrator is pressed against each portion of the sectional surface of the battery 1000.

From the viewpoint of electrical insulation, the thickness of the thickest portion of the insulating member 900 may be greater than or equal to 10 µm, and the thickness of the thinnest portion of the insulating member 900 may be greater than or equal to 10 µm. From the viewpoint of impact absorption, the thickness of the thickest portion of the insulating member 900 may be greater than or equal to 100 µm, and the thickness of the thinnest portion of the insulating member 900 may be greater than or equal to 100 µm. From the viewpoint of insulation from ambient air and water, the thickness of the thickest portion of the insulating member 900 may be greater than or equal to 1 mm, and the thickness of the thinnest portion of the insulating member 900 may be greater than or equal to 1 mm. The upper limit of the thickness of the insulating member 900 is not specifically limited. The thickness of the insulating member 900 may be set to a moderate thickness that can achieve both the weight energy density and the volume energy density of the battery 1000 and the effect of the insulating member 900. Herein, the thickness of the insulating member 900 is the length of the insulating member 900 in the direction of a normal to the chamfered portions 800.

In the configuration described above, the insulating member 900 covers the corner portions of the power generating element 500, specifically the chamfered portions 800 provided in the electrode layer 100. Therefore, a short circuit between the electrode layer 100 and the counter electrode layer 200 and contact of foreign matter at the corner portions of the power generating element 500 can be suppressed. In addition, the insulating member 900 functions also as a protection member and a buffer member for the corner portions of the power generating element 500, which tend to be deformed during handling of the battery 1000 to incur a failure such as a short circuit. Therefore, the battery 1000 with a high energy density and high reliability can be achieved, as it is possible to thin the battery, which tends to cause a short circuit or damage because of the structure.

Further, the effect of the chamfered portions 800 and the insulating member 900 provided at the corner portions of the power generating element 500 will be described in more detail.

With the configuration described above, the problem caused as the corner portions of the power generating element 500 are exposed from the insulating member 900 can be resolved by providing the chamfered portions 800 at the corner portions of the power generating element 500 and covering the chamfered portions 800 using the insulating member 900. In addition, occurrence of a structural defect such as separation can also be suppressed as the corner portions of the power generating element 500, which tend to be damaged by an impact due to handling of the battery 1000, are protected by the insulating member 900.

For example, if the corner portions of the power generating element 500 are covered by the insulating member 900 by applying the insulating member 900 etc. without providing the chamfered portions 800, it is difficult to wet the vertexes of the corner portions of the power generating element 500, end portions of the power generating element 500 such as ridge lines, etc. with the insulating member 900 because of the effect of surface tension. That is, the corner portions of the power generating element 500 have high surface energy in the case where the chamfered portions 800 are not provided. For example, it is significantly difficult to wet the vertexes of the corner portions and the ridge lines, as the vertexes and the ridge lines repel the material of the insulating member 900 which is liquid. Therefore, the corner portions of the electrode current collector 110 may be exposed, as the insulating member 900 is thinnest at the end portions of the corner portions of the power generating element 500. In contrast, even the end portions of the electrode current collector 110 can be covered by the insulating member 900, by dispersing and reducing surface energy by removing portions at which surface tension is concentrated (i.e. the end portions of the corner portions of the electrode current collector 110) through chamfering.

That is, the corner portions of the power generating element 500 can be covered by the insulating member 900, by chamfering the four corners of the power generating element 500 in a plan view of the power generating element 500, e.g. portions including the end portions (vertexes) at the four corners of the electrode current collector 110, at which a short circuit, interlayer separation, and deformation tend to be incurred, to disperse surface energy at such portions. Consequently, the problem caused as the four corners of the power generating element are exposed is resolved, and the battery 1000 with high reliability can be achieved without impairing battery characteristics.

Thus, the range of the chamfered portions 800 is set such that the insulating member 900 which covers the chamfered portions 800 does not expose the chamfered portions 800, for example. For example, it is only necessary that the range of the chamfered portions 800 should be set such that the electrode current collector 110 at chamfered portions, that is, the electrode current collector 110 exposed at the chamfered portions 800, is not exposed from the insulating member 900 from the principal surface (i.e. the upper surface) of the power generating element 500 in a top view in the laminating direction to the side surfaces thereof. That is, it is meant that the surface energy of the surfaces covered by the insulating member 900 is less than that at the end portions of the corner portions of the power generating element 500 before being chamfered.

The state of application of the insulating member 900 is varied in accordance with the viscosity and the surface tension of the material of the insulating member 900, the wettability of the surfaces of the power generating element 500, etc. Therefore, the range of the chamfered portions 800 may be set in accordance with the material of the insulating member 900 to be used and the material and the surfaces of the power generating element 500, such that the corner portions of the power generating element 500 are not exposed.

When a comparison is made between the configuration of the battery 1000 according to the present embodiment and the configuration of the batteries described in Patent Literature 1 and Patent Literature 2, the following differences are found.

Patent Literature 1 describes a storage battery in which an electrode assembly is provided with an angled portion and which includes an insulating sheet that insulates a case that houses the electrode assembly and the electrode assembly from each other. However, the insulating sheet is a bag-shaped sheet that houses the electrode assembly, and is not secured or joined to the electrode assembly. Therefore, a short circuit tends to be incurred when the insulating sheet is moved and displaced by vibration or an impact. In addition, the electrode assembly is not provided with a surface inclined with respect to the laminating direction. Therefore, in the case where the battery is thinned, the distance between the current collectors for the positive and negative electrodes tends to be reduced, and a short circuit may not be suppressed. Since the battery does not have a solid electrolyte layer, the insulating sheet and the positive electrode, the negative electrode, and the separator are not secured to each other, and the invention is different from the present disclosure in both the object and the configuration.

Patent Literature 2 discloses a battery that includes an inclined portion and an exposed portion that exposes a part of a current collector, an active material layer being inclined toward the exposed portion in the inclined portion, and the inclined portion and the exposed portion being covered by an insulating member. However, the end portion of the current collector is exposed, and the invention is totally different from the configuration according to the present embodiment, which relates to a battery which includes a solid electrolyte layer and in which the corner portions of the power generating element 500 including the electrode current collector 110 etc. are chamfered. Therefore, in the case where a battery that includes a solid electrolyte layer is configured in this manner, the exposed end portion of the current collector is not fixed, and elements around the end portion of the current collector may be damaged and separation between the current collector and the separator (solid electrolyte layer) may be incurred by deformation caused when a stress is applied. Therefore, the configuration is not practical, as damage and interlayer separation are caused easily.

In contrast, the problems discussed above are not caused with the battery 1000 according to the present embodiment. In addition, Patent Literature 1 and Patent Literature 2 do not disclose or suggest the battery according to the present embodiment, in which the chamfered portion 800 is provided at least in a part of the corner portions of the power generating element 500 and the chamfered portion 800 is covered by the insulating member 900.

### [Modifications]

A plurality of modifications of the embodiment will be described below. In the following description of the modifications, differences between the embodiment and each of the modifications will be mainly described, and the description of common features will be omitted or simplified.

### (1) First Modification

First, a first modification of the embodiment will be described.

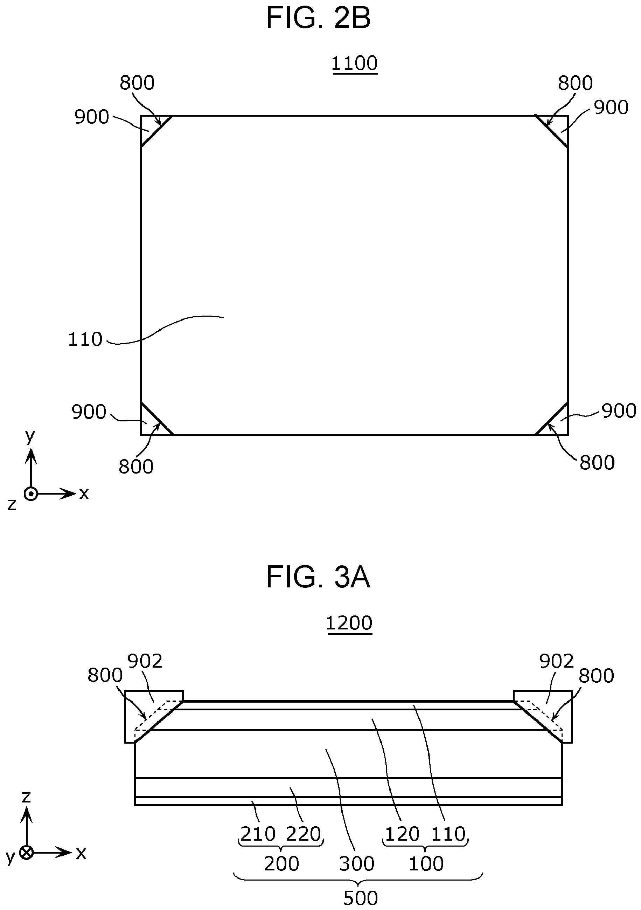

Fig. 2A is a side view illustrating a schematic configuration of a battery 1100 according to the first modification of the embodiment. Specifically, Fig. 2A is a side view of the battery 1100 as seen from the negative side in the y-axis direction. Fig. 2B is a top view illustrating a schematic configuration of the battery 1100 according to the first modification of the embodiment. Specifically, Fig. 2B is a plan view of the battery 1100 as seen from the positive side in the z-axis direction.

As illustrated in Figs. 2A and 2B, the battery 1100 according to the first modification of the embodiment is different from the battery 1000 according to the embodiment in including a power generating element 501 in place of the power generating element 500. The power generating element 501 is different from the power generating element 500 in that chamfered portions 801 covered by an insulating member 901 are provided also at the four corners of the power generating element 501 on the side of the counter electrode layer 200.

The battery 1100 includes the power generating element 501, the insulating member 900, and the insulating member 901. The chamfered portions 800 and the chamfered portions 801 are provided at the corner portions of the power generating element 501. The insulating member 900 covers the chamfered portions 800, and is in contact with the chamfered portions 800. The insulating member 901 covers the chamfered portions 801, and is in contact with the chamfered portions 801.

The chamfered portion 801 is positioned at each of the four corners of a rectangular parallelepiped when the power generating element 501 in a rectangular parallelepiped shape is viewed in plan. Specifically, the chamfered portion 801 is positioned at the four corners of the lower surface of the power generating element 501. The power generating element 501 is provided with four chamfered portions 801. The number of the chamfered portions 801 is not limited to four, and may be greater than or equal to one and less than or equal to three, and may be greater than or equal to five.

The chamfered portions 801 are provided in the counter electrode layer 200 of the power generating element 501, and specifically provided over the counter electrode current collector 210 and the counter electrode active material layer 220. The chamfered portions 801 are flat surfaces inclined with respect to the laminating direction of the power generating element 501. The entire surface of each of the chamfered portions 801 is covered by the insulating member 901.

The insulating member 901 is joined to the power generating element 501. Specifically, the insulating member 901 covers the chamfered portions 801, and is joined to the counter electrode layer 200 of the power generating element 501 through the chamfered portions 801. The insulating member 901 individually covers the chamfered portions 801 at the four corners of the power generating element 501 in a plan view of the power generating element 501. That is, the battery 1100 is provided with four insulating members 901. Some of the chamfered portions 801 at the four corners may not be covered by the insulating member 901.

At each of the chamfered portions 801, the insulating member 901 collectively covers respective end portions of the counter electrode current collector 210 and the counter electrode active material layer 220 exposed to the chamfered portion 801 to be joined to the counter electrode current collector 210 and the counter electrode active material layer 220. This makes it unlikely that the counter electrode current collector 210 and the counter electrode active material layer 220 are separated from each other. The insulating member 901 can suppress contact between an active material raw material and foreign matter by covering the counter electrode active material layer 220. Further, the insulating member 901 can suppress a short circuit with the electrode layer 100 and characteristic degradation due to separation of powder of the active material raw material, or so-called powder dropping, by covering the counter electrode active material layer 220.

With such a configuration, contact of foreign matter at the corner portions of the power generating element 501 can be suppressed by the chamfered portions 800 and the chamfered portions 801 which are provided at the four corners of the upper and lower surfaces of the power generating element 501, that is, the four corners of the electrode layer 100 and the counter electrode layer 200, and the insulating member 900 and the insulating member 901. In addition, the corner portions of the power generating element 501, which tend to be deformed during handling of the battery 1100 to incur a failure such as a short circuit, are protected effectively. Therefore, it is possible to achieve the battery 1100 with higher reliability. In addition, the battery can be further thinned, since the corner portions of the power generating element 501 are protected effectively.

### (2) Second Modification

Next, a second modification of the embodiment will be described.

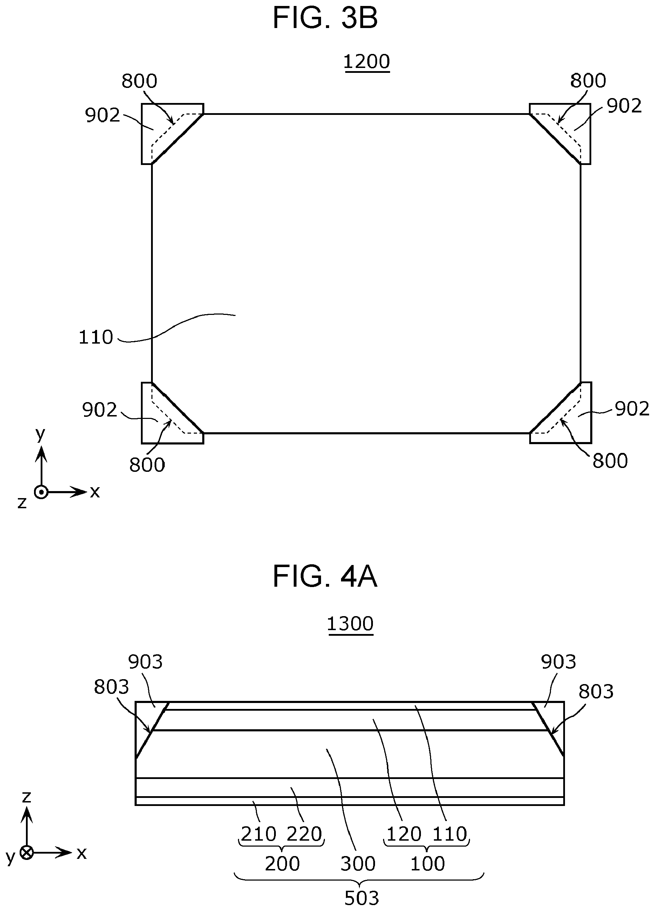

Fig. 3A is a side view illustrating a schematic configuration of a battery 1200 according to the second modification of the embodiment. Specifically, Fig. 3A is a side view of the battery 1200 as seen from the negative side in the y-axis direction. Fig. 3B is a top view illustrating a schematic configuration of the battery 1200 according to the second modification of the embodiment. Specifically, Fig. 3B is a plan view of the battery 1200 as seen from the positive side in the z-axis direction.

As illustrated in Figs. 3A and 3B, the battery 1200 according to the second modification of the embodiment is different from the battery 1000 according to the embodiment in including an insulating member 902 that covers the chamfered portions 800 to the outer side of the outer periphery thereof in place of the insulating member 900.

The battery 1200 includes the power generating element 500 and the insulating member 902. A chamfered portion 800 is provided at the corner portions of the power generating element 500. The insulating member 902 covers the chamfered portions 800 to the outer side of the outer periphery thereof, and is in contact with the chamfered portions 800.

The insulating member 902 is provided to extend to the upper surface and the side surfaces of the power generating element 500. The insulating member 902 is joined to the surfaces of the power generating element 500 to the outer side of the outer periphery of the chamfered portions 800. That is, the insulating member 902 is joined to both the upper surface and the side surfaces of the power generating element 500. Specifically, the insulating member 902 is joined to the upper surface of the electrode current collector 110 and the side surfaces of the solid electrolyte layer 300. The insulating member 902 may be provided to extend to only either of the upper surface and the side surfaces of the power generating element 500.

As the insulating member 902 is provided to extend to the upper surface and the side surfaces of the power generating element 500 in this manner, the sealing performance of the insulating member 902 for the outer peripheral portion of the chamfered portions 800 and the securing performance between the insulating member 902 and the power generating element 500 are improved. Therefore, the reliability for a stress due to hot-cold cycles, an impact, and repeated charging and discharging is improved. Further, a stress caused when the insulating member 902 is cured during formation of the insulating member 902 is also dispersed to the upper surface and the side surfaces of the power generating element 500. Therefore, separation of the insulating member 902 is suppressed. In addition, intrusion of ambient air and water is suppressed to improve the environment resistance of the battery, even in an environment with the presence of ambient air and water. Therefore, it is possible to achieve the battery 1200 with higher reliability.

### (3) Third Modification

Next, a third modification of the embodiment will be described.

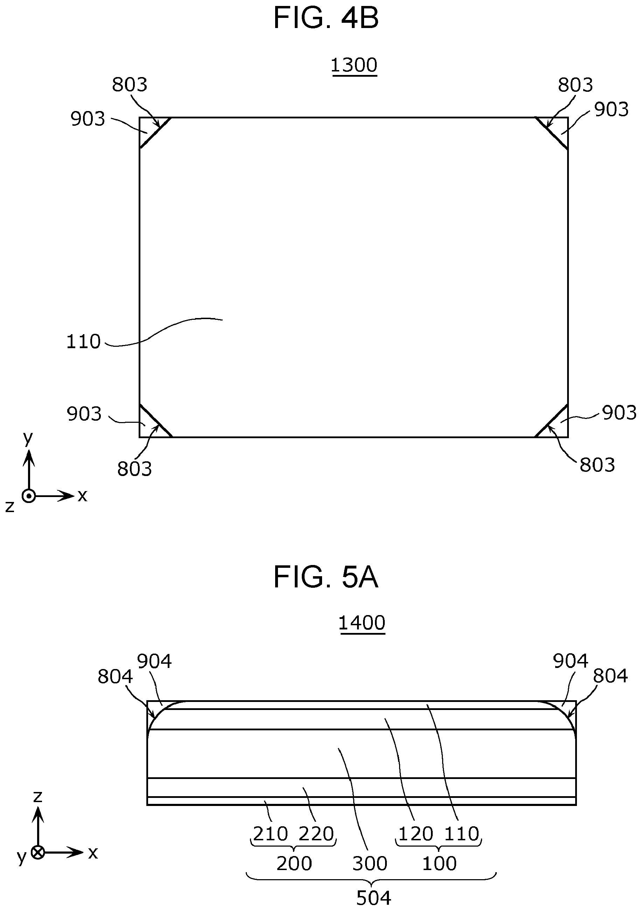

Fig. 4A is a side view illustrating a schematic configuration of a battery 1300 according to the third modification of the embodiment. Specifically, Fig. 4A is a side view of the battery 1300 as seen from the negative side in the y-axis direction. Fig. 4B is a top view illustrating a schematic configuration of the battery 1300 according to the third modification of the embodiment. Specifically, Fig. 4B is a plan view of the battery 1300 as seen from the positive side in the z-axis direction.

As illustrated in Figs. 4A and 4B, the battery 1300 according to the third modification of the embodiment is different from the battery 1000 according to the embodiment in including a power generating element 503 and an insulating member 903 in place of the power generating element 500 and the insulating member 900, respectively. In addition, the power generating element 503 is different from the power generating element 500 in being provided with chamfered portions 803 covered by the insulating member 903 in place of being provided with the chamfered portions 800 covered by the insulating member 900.

The battery 1300 includes the power generating element 503 and the insulating member 903. A chamfered portion 803 is provided at the corner portions of the power generating element 503. The insulating member 903 covers the chamfered portions 803, and is in contact with the chamfered portions 803.

The chamfered portion 803 is positioned at each of the four corners of a rectangular parallelepiped when the power generating element 503 in a rectangular parallelepiped shape is viewed in plan. The chamfered portions 803 are flat surfaces inclined with respect to the laminating direction of the power generating element 503.

The chamfered portions 803 are provided over the electrode layer 100 and the solid electrolyte layer 300 of the power generating element 503, and specifically provided over the electrode current collector 110, the electrode active material layer 120, and the solid electrolyte layer 300. The entire surface of each of the chamfered portions 803 is covered by the insulating member 903.

The insulating member 903 is joined to the power generating element 503. At each of the chamfered portions 803, the insulating member 903 collectively covers respective end portions of the electrode current collector 110, the electrode active material layer 120, and the solid electrolyte layer 300 exposed to the chamfered portion 803 to be joined to each of the electrode current collector 110, the electrode active material layer 120, and the solid electrolyte layer 300.

The corner portions of the power generating element 503 are protected over the electrode current collector 110, the electrode active material layer 120, and the solid electrolyte layer 300, as the chamfered portions 803 are provided over the electrode current collector 110, the electrode active material layer 120, and the solid electrolyte layer 300 and the insulating member 903 covers the chamfered portions 803 in this manner. In addition, the electrode current collector 110, the electrode active material layer 120, and the solid electrolyte layer 300 are collectively covered by the insulating member 903. Therefore, it is possible to suppress occurrence and progress of separation between the electrode current collector 110 and the electrode active material layer 120 and separation between the electrode active material layer 120 and the solid electrolyte layer 300 due to hot-cold cycles, an external impact, etc. Hence, it is possible to achieve the battery 1300 with higher reliability.

### (4) Fourth Modification

Next, a fourth modification of the embodiment will be described.

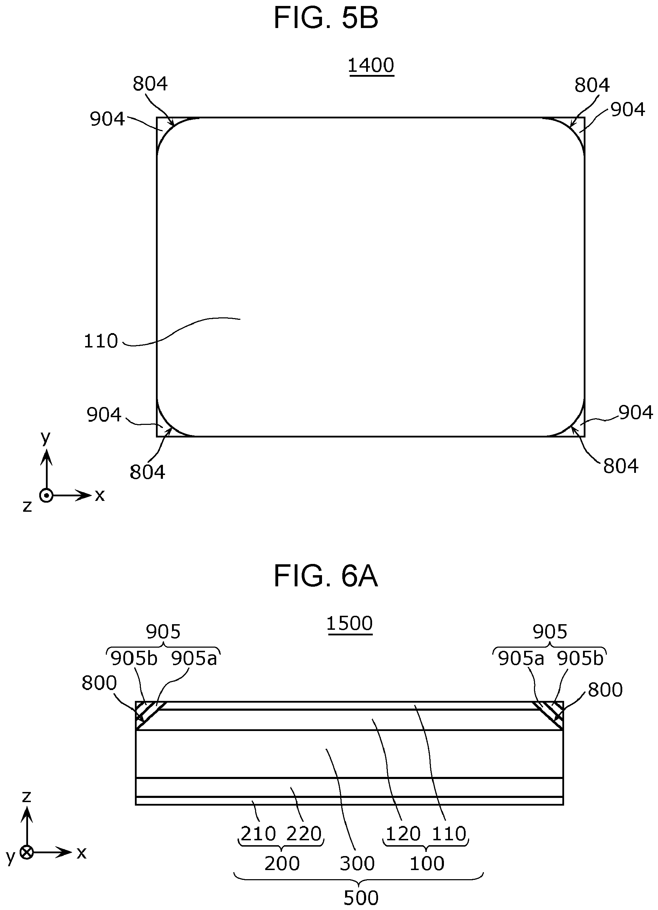

Fig. 5A is a side view illustrating a schematic configuration of a battery 1400 according to the fourth modification of the embodiment. Specifically, Fig. 5A is a side view of the battery 1400 as seen from the negative side in the y-axis direction. Fig. 5B is a top view illustrating a schematic configuration of the battery 1400 according to the fourth modification of the embodiment. Specifically, Fig. 5B is a plan view of the battery 1400 as seen from the positive side in the z-axis direction.

As illustrated in Figs. 5A and 5B, the battery 1400 according to the fourth modification of the embodiment is different from the battery 1000 according to the embodiment in including a power generating element 504 and an insulating member 904 in place of the power generating element 500 and the insulating member 900, respectively. In addition, the power generating element 504 is different from the power generating element 500 in being provided with chamfered portions 804 covered by the insulating member 904 in place of being provided with the chamfered portions 800 covered by the insulating member 900.

The battery 1400 includes the power generating element 504 and the insulating member 904. A chamfered portion 804 is provided at the corner portions of the power generating element 504. The insulating member 904 covers the chamfered portions 804, and is in contact with the chamfered portions 804.

The chamfered portion 804 is positioned at each of the four corners of a rectangular parallelepiped when the power generating element 504 in a rectangular parallelepiped shape is viewed in plan. The chamfered portions 804 are curved surfaces. Consequently, the surface area is increased compared to the case where the same range is chamfered such that the chamfered portions are flat surfaces, which makes it easier to cover the chamfered portions 804 using the insulating member 904. At least a part of the chamfered portions 804 is inclined with respect to the laminating direction of the power generating element 504.

The insulating member 904 is joined to the power generating element 504. At each of the chamfered portions 804, the insulating member 904 collectively covers respective end portions of the electrode current collector 110, the electrode active material layer 120, and the solid electrolyte layer 300 exposed to the chamfered portion 804 to be joined to each of the electrode current collector 110, the electrode active material layer 120, and the solid electrolyte layer 300.

### (5) Fifth Modification

Next, a fifth modification of the embodiment will be described.

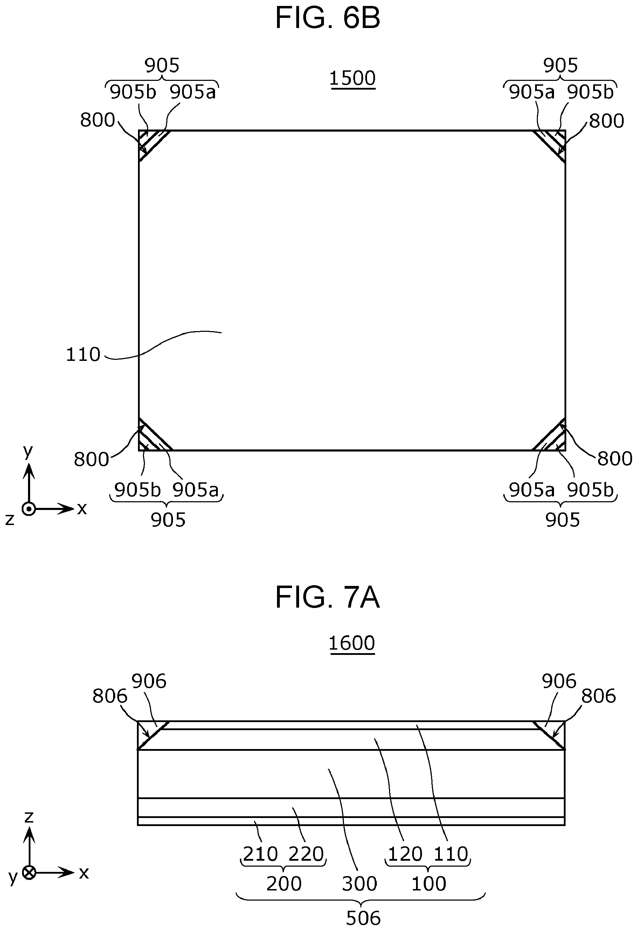

Fig. 6A is a side view illustrating a schematic configuration of a battery 1500 according to the fifth modification of the embodiment. Specifically, Fig. 6A is a side view of the battery 1500 as seen from the negative side in the y-axis direction. Fig. 6B is a top view illustrating a schematic configuration of the battery 1500 according to the fifth modification of the embodiment. Specifically, Fig. 6B is a plan view of the battery 1500 as seen from the positive side in the z-axis direction.

As illustrated in Figs. 6A and 6B, the battery 1500 according to the fifth modification of the embodiment is different from the battery 1000 according to the embodiment in including an insulating member 905 that includes a plurality of insulating films 905a and 905b in place of the insulating member 900.

The insulating member 905 includes a structure in which the plurality of insulating films 905a and 905b are laminated on each other. The insulating film 905a and the insulating film 905b are laminated on the chamfered portion 800 in this order from the side of the chamfered portion 800. An insulating member that is not in a film form may be further formed on the plurality of insulating films 905a and 905b.

The thickness of each of the plurality of insulating films 905a and 905b is less than or equal to 30 µm, for example. From the viewpoint of forming a more precise insulating member 905, the thickness of each of the plurality of insulating films 905a and 905b may be less than or equal to 10 µm.

While two insulating films are included in the insulating member 905, three or more insulating films may be included. Consequently, the insulating member 905 with a thickness of greater than or equal to 50 µm may be formed, and the insulating member 905 with a thickness of greater than or equal to 500 µm may be formed.

The laminating structure of the plurality of insulating films 905a and 905b of the insulating member 905 is formed by applying a resin such as an epoxy resin to the chamfered portions 800 a plurality of times, for example. Such a laminating structure of the insulating films 905a and 905b of the insulating member 905 can be observed through common observation of a polished sectional surface performed using an optical microscope, a scanning electron microscope (SEM), etc. A precise and firm insulating member 905, in which a defect such as a void and a thin portion due to irregularities in thickness is not easily caused, is formed by laminating the plurality of insulating films 905a and 905b on the chamfered portions 800 in this manner. The plurality of thin insulating films 905a and 905b are laminated on the chamfered portion 800 in contrast to the case where a single layer with the same thickness is formed as the insulating member 905. Therefore, a small stress is generated when the insulating member 905 is cured during formation of the insulating member 905, which makes it difficult to separate the insulating member 905 from the chamfered portions 800.

The types of materials contained in the plurality of insulating films 905a and 905b may be different from each other. Consequently, the insulating member 905 includes a plurality of insulating films 905a and 905b with different properties, and therefore a highly functional insulating member 905 can be achieved. The language "types of materials are different" as used herein means that the materials are substantially different (e.g. products or grades of manufacture are different) from each other in at least one of the molecular structure, the molecular composition, and the molecular weight in the case where the materials are resins. The types of materials contained in the plurality of insulating films 905a and 905b may be the same as each other.

Regarding the hardness of the plurality of insulating films 905a and 905b, the hardness of the insulating film 905a, which is one of the plurality of insulating films 905a and 905b that is the closer to the chamfered portions 800, may be lower. That is, the hardness of the insulating film 905a, which is the closer to the chamfered portions 800 than the insulating film 905b, may be lower than that of the insulating film 905b. Since the insulating film 905a which is relatively soft is positioned close to the chamfered portions 800 of the power generating element 500 in this manner, the insulating film 905a is easily deformed to be expanded and contracted in a following manner as the power generating element 500 is expanded and contracted because of hot-cold cycles or charging and discharging, and the insulating member 905 is not easily separated from the chamfered portions 800.

Regarding the hardening temperature of the plurality of insulating films 905a and 905b such as a thermosetting temperature, a glass transition point, or a melting point, the hardening temperature of the insulating film 905a, which is one of the plurality of insulating films 905a and 905b that is the closer to the chamfered portions 800, may be higher. Consequently, the insulating film 905a which has been formed earlier is not easily degraded by heat generated to form the insulating film 905b.

### (6) Sixth Modification

Next, a sixth modification of the embodiment will be described.

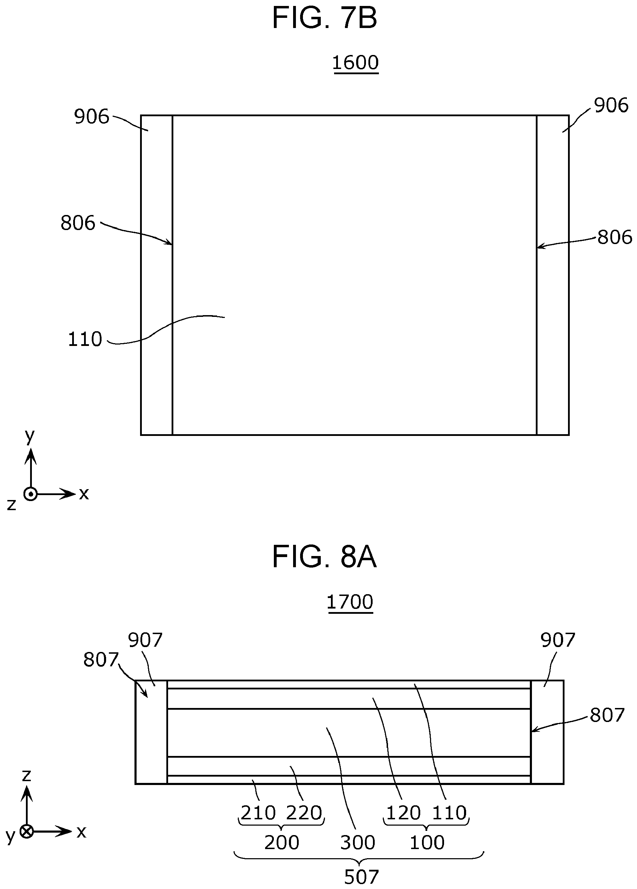

Fig. 7A is a side view illustrating a schematic configuration of a battery 1600 according to the sixth modification of the embodiment. Specifically, Fig. 7A is a side view of the battery 1600 as seen from the negative side in the y-axis direction. Fig. 7B is a top view illustrating a schematic configuration of the battery 1600 according to the sixth modification of the embodiment. Specifically, Fig. 7B is a plan view of the battery 1600 as seen from the positive side in the z-axis direction.

As illustrated in Figs. 7A and 7B, the battery 1600 according to the sixth modification of the embodiment is different from the battery 1000 according to the embodiment in including a power generating element 506 and an insulating member 906 in place of the power generating element 500 and the insulating member 900, respectively. In addition, the power generating element 506 is different from the power generating element 500 in being provided with chamfered portions 806 covered by the insulating member 906 in place of being provided with the chamfered portions 800 covered by the insulating member 900.

The battery 1600 includes the power generating element 506 and the insulating member 906. A chamfered portion 806 is provided at the corner portions of the power generating element 506. The insulating member 906 covers the chamfered portions 806, and is in contact with the chamfered portions 806.

The chamfered portion 806 is positioned on each of the two facing sides of a rectangular parallelepiped when the power generating element 506 in a rectangular parallelepiped shape is viewed in plan. The chamfered portions 806 are flat surfaces inclined with respect to the laminating direction of the power generating element 506. The power generating element 506 is provided with two chamfered portions 806. The chamfered portion 806 may be positioned on one side of a rectangular parallelepiped, or may be positioned on three or more sides of a rectangular parallelepiped, when the power generating element 506 is viewed in plan.

The chamfered portions 806 are provided in the electrode layer 100 of the power generating element 506, and specifically provided over the electrode current collector 110 and the electrode active material layer 120. The entire surface of each of the chamfered portions 806 is covered by the insulating member 906. The chamfered portions 806 may be provided in only the electrode current collector 110, or may be provided over the electrode current collector 110, the electrode active material layer 120, and the solid electrolyte layer 300.

The insulating member 906 is joined to the power generating element 506. Specifically, the insulating member 906 covers the chamfered portions 806, and is joined to the electrode layer 100 of the power generating element 506 through the chamfered portions 806. The insulating member 906 individually covers the chamfered portions 806 on the two sides of the power generating element 506 in a plan view of the power generating element 506. That is, the battery 1600 is provided with two insulating members 906. Some of the chamfered portions 806 on the two sides may not be covered by the insulating member 906.

At each of the chamfered portions 806, the insulating member 906 collectively covers respective end portions of the electrode current collector 110 and the electrode active material layer 120 exposed to the chamfered portion 806 to be joined to each of the electrode current collector 110 and the electrode active material layer 120.

The entire sides of the power generating element 506 are protected by providing the chamfered portions 806 on sides of a rectangular parallelepiped when the power generating element 506 is viewed in plan and covering the chamfered portions 806 using the insulating member 906 in this manner.

### (7) Seventh Modification

Next, a seventh modification of the embodiment will be described.

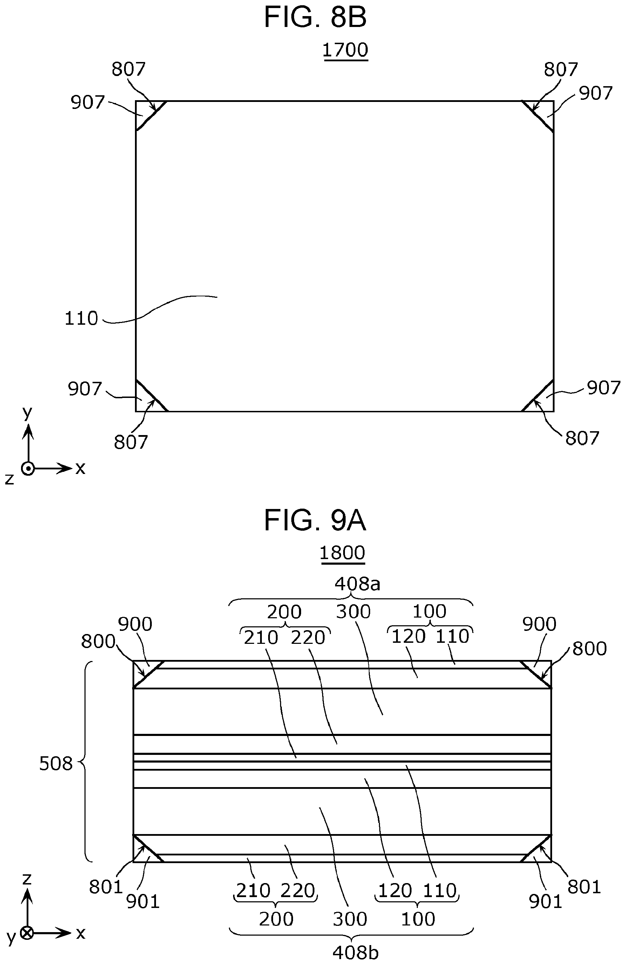

Fig. 8A is a side view illustrating a schematic configuration of a battery 1700 according to the seventh modification of the embodiment. Specifically, Fig. 8A is a side view of the battery 1700 as seen from the negative side in the y-axis direction. Fig. 8B is a top view illustrating a schematic configuration of the battery 1700 according to the seventh modification of the embodiment. Specifically, Fig. 8B is a plan view of the battery 1700 as seen from the positive side in the z-axis direction.

As illustrated in Figs. 8A and 8B, the battery 1700 according to the seventh modification of the embodiment is different from the battery 1000 according to the embodiment in including a power generating element 507 and an insulating member 907 in place of the power generating element 500 and the insulating member 900, respectively. In addition, the power generating element 507 is different from the power generating element 500 in being provided with chamfered portions 807 covered by the insulating member 907 in place of being provided with the chamfered portions 800 covered by the insulating member 900.

The battery 1700 includes the power generating element 507 and the insulating member 907. A chamfered portion 807 is provided at the corner portions of the power generating element 507. The insulating member 907 covers the chamfered portions 807, and is in contact with the chamfered portions 807.

The chamfered portion 807 is positioned at each of the four corners of a rectangular parallelepiped when the power generating element 507 in a rectangular parallelepiped shape is viewed in plan. The chamfered portions 807 are flat surfaces that are parallel to the laminating direction of the power generating element 507. That is, the chamfered portion 807 is positioned on each of the four sides of a rectangular parallelepiped that are parallel to the laminating direction of the power generating element 507.

The chamfered portions 807 are provided over the electrode layer 100, the solid electrolyte layer 300, and the counter electrode layer 200 of the power generating element 507, and specifically provided over the electrode current collector 110, the electrode active material layer 120, the solid electrolyte layer 300, the counter electrode active material layer 220, and the counter electrode current collector 210. The entire surface of each of the chamfered portions 807 is covered by the insulating member 907.

The insulating member 907 is joined to the power generating element 507. At each of the chamfered portions 807, the insulating member 907 collectively covers respective end portions of the electrode current collector 110, the electrode active material layer 120, the solid electrolyte layer 300, the counter electrode active material layer 220, and the counter electrode current collector 210 exposed to the chamfered portion 807 to be joined to each of the electrode current collector 110, the electrode active material layer 120, the solid electrolyte layer 300, the counter electrode active material layer 220, and the counter electrode current collector 210. Consequently, separation of layers that constitute the power generating element 507 is suppressed.

The entire sides of a rectangular parallelepiped that are parallel to the laminating direction of the power generating element 507 are protected by positioning the chamfered portions 807 on the sides of a rectangular parallelepiped that are parallel to the laminating direction of the power generating element 507 and covering the chamfered portions 807 using the insulating member 907. Hence, it is possible to achieve the battery 1700 with higher reliability.

### (8) Eighth Modification

Next, an eighth modification of the embodiment will be described.

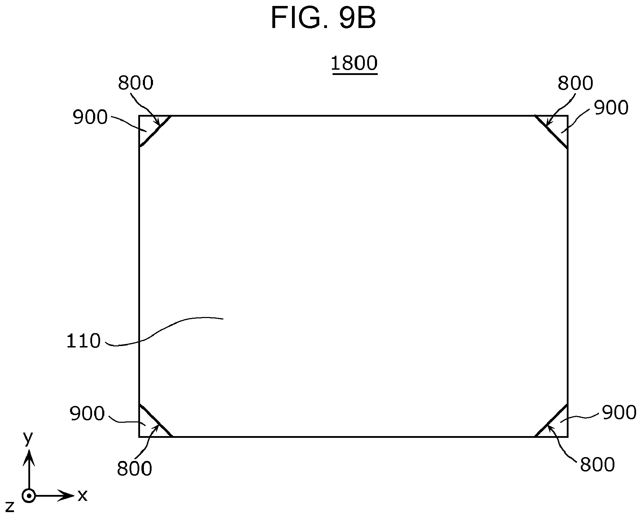

Fig. 9A is a side view illustrating a schematic configuration of a battery 1800 according to the eighth modification of the embodiment. Specifically, Fig. 9A is a side view of the battery 1800 as seen from the negative side in the y-axis direction. Fig. 9B is a top view illustrating a schematic configuration of the battery 1800 according to the eighth modification of the embodiment. Specifically, Fig. 9B is a plan view of the battery 1800 as seen from the positive side in the z-axis direction.

As illustrated in Figs. 9A and 9B, the battery 1800 according to the eighth modification of the embodiment is different from the battery 1000 according to the embodiment in including a power generating element 508 in place of the power generating element 500. In addition, the power generating element 508 includes a plurality of unit cells 408a and 408b each configured in the same manner as the power generating element 500.

The battery 1800 includes the power generating element 508 including a structure in which the plurality of unit cells 408a and 408b are laminated on each other, the insulating member 900, and the insulating member 901. The chamfered portions 800 and the chamfered portions 801 are provided at the corner portions of the power generating element 508. The insulating member 900 covers the chamfered portions 800, and is in contact with the chamfered portions 800. The insulating member 901 covers the chamfered portions 801, and is in contact with the chamfered portions 801.

The power generating element 508 includes a structure in which two unit cells 408a and 408b are laminated to be connected in series with each other in the z-axis direction, the plurality of unit cells 408a and 408b each being configured in the same manner as the power generating element 500 illustrated in Figs. 1A and 1B. As with the power generating element 500, the plurality of unit cells 408a and 408b each includes an electrode layer 100, a counter electrode layer 200, and a solid electrolyte layer 300 positioned between the electrode layer 100 and the counter electrode layer 200. In the power generating element 508, the counter electrode current collector 210 of the unit cell 408a and the electrode current collector 110 of the unit cell 408b are electrically connected to each other. Consequently, a bipolar electrode in which the counter electrode layer 200 and the electrode layer 100 are connected to each other via the counter electrode current collector 210 and the electrode current collector 110 is formed. The unit cell 408a and the unit cell 408b are bonded to each other using an electrically conductive adhesive etc. such as a thermosetting conductive paste, for example. While the number of unit cells included in the power generating element 508 is two, the power generating element 508 may have a structure in which three or greater unit cells are laminated on each other.

The chamfered portion 800 is positioned at each of the four corners of a rectangular parallelepiped when the power generating element 508 in a rectangular parallelepiped shape is viewed in plan. Specifically, the chamfered portion 800 is positioned at the four corners of the upper surface of the power generating element 508. The chamfered portions 800 are provided on the electrode layer 100 in the unit cell 408a on the upper side.

The chamfered portion 801 is positioned at each of the four corners of a rectangular parallelepiped when the power generating element 508 in a rectangular parallelepiped shape is viewed in plan. Specifically, the chamfered portion 801 is positioned at the four corners of the lower surface of the power generating element 508. The chamfered portions 801 are provided on the counter electrode layer 200 in the unit cell 408b on the lower side.

Also in the battery 1800 of a laminated type in which the plurality of unit cells 408a and 408b are laminated on each other, the power generating element 508 is provided with the chamfered portions 800 covered by the insulating member 900 and the chamfered portions 801 covered by the insulating member 901. Therefore, it is possible to achieve the battery 1800 of a laminated type that provides a high voltage and that is highly reliable.

While the counter electrode layer 200 of the unit cell 408a on the upper side and the electrode layer 100 of the unit cell 408b on the lower side, which constitute a bipolar electrode, are not provided with a chamfered portion in the present modification, such layers may be provided with a chamfered portion. It is possible to achieve a battery of a laminated type that is highly reliable, as a short circuit etc. between the upper and lower unit cells can be suppressed, by providing a bipolar electrode portion with chamfered portions covered by an insulating member.

The plurality of unit cells 408a and 408b may be laminated so as to be electrically connected in parallel with each other. In this case, it is possible to achieve a battery of a laminated type that provides a high capacity and that is highly reliable.

### [Method of Manufacturing Battery]

Next, an example of a method of manufacturing the battery according to the present embodiment will be described. A method of manufacturing the battery 1800 according to the eighth modification of the embodiment discussed above will be described below. In the following description of the manufacturing method, the electrode layer 100 is a positive electrode layer that includes a positive electrode active material layer and a positive electrode current collector as the electrode active material layer 120 and the electrode current collector 110, and the counter electrode layer 200 is a negative electrode layer that includes a negative electrode active material layer and a negative electrode current collector as the counter electrode active material layer 220 and the counter electrode current collector 210.

First, pastes that are used to print and form the electrode active material layer 120 and the counter electrode active material layer 220 are fabricated. Glass powder of an Li₂S-P₂S₅-based sulfide with an average particle diameter of about 10 µm and containing triclinic crystals as main components, for example, is prepared as a solid electrolyte raw material to be used for a mixture of each of the electrode active material layer 120 and the counter electrode active material layer 220. The glass powder may be glass powder having high ion conductivity of about 2 to 3×10⁻³ S/cm, for example. Powder of an Li-Ni-Co-Al composite oxide (LiNi_{0.8}Co_{0.15}Al_{0.05}O₂) in a layer structure and with an average particle diameter of about 5 µm, for example, may be used as the positive electrode active material. A paste for the positive electrode active material layer (electrode active material layer) in which a mixture containing the positive electrode active material discussed above and the glass powder discussed above is dispersed in an organic solvent etc. is fabricated. Meanwhile, powder of natural graphite with an average particle diameter of about 10 µm, for example, may be used as the negative electrode active material. A paste for the negative electrode active material layer (counter electrode active material layer) in which a mixture containing the negative electrode active material discussed above and the glass powder discussed above is dispersed in an organic solvent etc. is fabricated in a similar manner.

Then, a copper foil with a thickness of about 15 µm, for example, is prepared as a material to be used as the electrode current collector 110 and the counter electrode current collector 210. The paste for the positive electrode active material layer and the paste for the negative electrode active material layer are printed on one of the surfaces of each copper foil in a predetermined shape and to a thickness of about 50 µm or greater and 100 µm or less by a screen printing method, for example. The paste for the positive electrode active material layer and the paste for the negative electrode active material layer are dried at 80°C or greater and 130°C or less, and brought to a thickness of 30 µm or greater and 60 µm or less. Consequently, current collectors (copper foils) on which the electrode active material layer 120 and the counter electrode active material layer 220 are respectively formed, that is, the electrode layer 100 and the counter electrode layer 200, are obtained.

Then, a paste for the solid electrolyte layer in which a mixture containing the glass powder discussed above is dispersed in an organic solvent etc. is fabricated. The paste for the solid electrolyte layer is printed to a thickness of about 100 µm, for example, using a metal mask on the surface of the active material layer of each of the electrode layer 100 and the counter electrode layer 200. After that, the electrode layer 100 and the counter electrode layer 200 on which the paste for the solid electrolyte layer has been printed is dried at 80°C or greater and 130°C or less.

Then, the solid electrolyte printed on the electrode active material layer 120 of the electrode layer 100 and the solid electrolyte printed on the counter electrode active material layer 220 of the counter electrode layer 200 are laminated so as to face and contact each other.

Then, the laminated body that has been laminated is pressurized using a pressurizing die. Specifically, an elastic sheet with a thickness of 70 µm and an elastic modulus of about 5×10⁶ Pa is inserted between the laminated body and the pressurizing die plate, that is, placed on the upper surface of the current collector of the laminated body. With this configuration, a pressure is applied to the laminated body via the elastic sheet. After that, the laminated body is pressurized for 90 seconds while the pressurizing die is heated to 50°C at a pressure of 300 MPa. Consequently, the unit cell 408a before being chamfered is obtained. In addition, the unit cell 408b before being chamfered is also fabricated by a similar method.

After that, the unit cell 408a and the unit cell 408b are chamfered by cutting the four corners of the electrode layer 100 of the unit cell 408a and the four corners of the counter electrode layer 200 of the unit cell 408b using a cutter. After that, the cut surfaces are polished using #800 polishing paper. Consequently, the chamfered portions 800 are formed in the electrode layer 100 of the unit cell 408a, and the chamfered portions 801 are formed in the counter electrode layer 200 of the unit cell 408b. The chamfered portions 800 and the chamfered portions 801 may be formed by polishing the respective four corners of the electrode layer 100 and the counter electrode layer 200 using polishing paper, rather than cutting such corners using a cutter. After that, polishing dust of the current collectors and the active material layers is wiped off using a non-woven fabric to be removed.

After that, a thermosetting epoxy resin is applied to the chamfered portions 800 and the chamfered portions 801 to a thickness of about 10 µm or greater and 30 µm or less as the material of the insulating member 900 and the insulating member 901, thermally cured at about 100°C or greater and 200°C or less, and thereafter cooled to room temperature at a rate of about 50°C/minute or less. The insulating member is not easily separated as the insulating member is cooled at a cooling rate of 50°C/minute or less. Consequently, the insulating member 900 is secured to cover the chamfered portions 800, and the insulating member 901 is secured to cover the chamfered portions 801. In this case, the material of the insulating member 900 and the insulating member 901 may be applied and cured repeatedly three times, for example, so that an insulating member with a thickness of about 30 µm or greater and 90 µm or less is secured to cover the chamfered portions 800 and the chamfered portions 801.

Then, a thermosetting conductor paste containing silver particles is printed on the surface of the counter electrode current collector 210 of the unit cell 408a fabricated as described above to a thickness of about 30 µm through screen printing. The unit cell 408b is disposed such that the counter electrode current collector 210 of the unit cell 408a and the electrode current collector 110 of the unit cell 408b are joined to each other by the conductor paste, to be pressure-bonded. After that, the unit cell 408a and the unit cell 408b are left to stand with a pressure of about 1 kg/cm² applied thereto, for example, thermally cured for 60 minutes at about 100°C or greater and 300°C or less, and thereafter cooled to room temperature. Consequently, the battery 1800 is obtained.

Since the unit cell 408a is configured in the same manner as the power generating element 500, the batteries 1000, 1100, 1200, 1300, 1400, 1500, 1600, and 1700 can be manufactured by forming chamfered portions and insulating members that match the shape of each of the batteries on the unit cell 408a before being chamfered described above.

The method and the procedure of forming a battery are not limited to those in the example discussed above.

While the paste for the positive electrode active material layer, the paste for the negative electrode active material layer, the paste for the solid electrolyte layer, and the conductor paste are applied by printing in the manufacturing method discussed above, this is not limiting. The printing method may be a doctor blade method, a calender method, a spin coat method, a dip coat method, an inkjet method, an offset method, a die coat method, a spray method, etc., for example.

While a thermosetting conductor paste containing silver metal particles is used as the conductor paste in the manufacturing method discussed above, this is not limiting. It is only necessary that the resin to be used for the thermosetting conductor paste should function as a binder for binding, and a resin with suitable printing performance and application performance may be selected in accordance with the manufacturing process adopted. The resin to be used for the thermosetting conductor paste may contain a thermosetting resin, for example. Examples of the thermosetting resin include (i) an amino resin such as a urea resin, a melamine resin, and a guanamine resin, (ii) an epoxy resin such as bisphenol A type, bisphenol F type, phenol novolac type, and cycloaliphatic type, (iii) an oxetane resin, (iv) a phenol resin such as resol type and novolac type, (v) a silicone-modified organic resin such as silicone epoxy and silicone polyester, etc. Only one kind of these materials may be used, or two or more kinds of these materials may be used in combination, for the resin.

### (Other Embodiments)

While the battery according to the present disclosure has been described above on the basis of an embodiment and modifications, the present disclosure is not limited to the embodiment and the modifications. Embodiments that have been subjected to various modifications conceived of by a person skilled in the art and other aspects constituted by combining some of the constituent elements of the embodiment and the modifications are also included in the scope of the present disclosure unless such embodiments or aspects depart from the scope and spirit of the present disclosure.

For example, while the solid electrolyte layer is in contact with the lower surface of the electrode active material layer and the upper surface of the counter electrode active material layer in the embodiment and the modifications described above, this is not limiting. The solid electrolyte layer may be in contact with the side surfaces of the electrode active material layer and the counter electrode active material layer, the lower surface of the electrode current collector, and the upper surface of the counter electrode current collector so as to cover the side surfaces of the electrode active material layer and the counter electrode active material layer.

In addition, while the insulating member covers the entire surface of the chamfered portions in the embodiment and the modifications described above, this is not limiting, for example. The insulating member may cover a part of the chamfered portions.

A variety of modifications, replacements, additions, omissions, etc. may be made to the embodiment and the modifications described above within the scope of the claims and equivalents thereof.

### Industrial Applicability

The battery according to the present disclosure may be used as a secondary battery such as an all-solid battery for use in various electronic devices, automobiles, etc., for example.

### Reference Signs List

100 electrode layer
110 electrode current collector
120 electrode active material layer
200 counter electrode layer
210 counter electrode current collector
220 counter electrode active material layer
300 solid electrolyte layer
408a, 408b unit cell
500, 501, 503, 504, 506, 507, 508 power generating element
800, 801, 803, 804, 806, 807 chamfered portion
900, 901, 902, 903, 904, 905, 906, 907 insulating member
905a, 905b insulating film
1000, 1100, 1200, 1300, 1400, 1500, 1600, 1700, 1800 battery

## Claims

1. A battery comprising:
a power generating element that includes a first electrode layer, a second electrode layer, and a solid electrolyte layer positioned between the first electrode layer and the second electrode layer; and
an insulating member,
wherein a chamfered portion is provided at least in a part of corner portions of the power generating element, and
the insulating member covers at least a part of the chamfered portion.

2. The battery according to claim 1,
wherein the power generating element is in a rectangular parallelepiped shape.

3. The battery according to claim 2,
wherein the chamfered portion is positioned at each of four corners of the rectangular parallelepiped when the power generating element is viewed in plan.

4. The battery according to any one of claims 1 to 3,
wherein the chamfered portion is inclined with respect to a laminating direction of the power generating element.

5. The battery according to any one of claims 1 to 4,
wherein the chamfered portion is a curved surface.

6. The battery according to any one of claims 1 to 5,
wherein the first electrode layer includes
a current collector, and
an active material layer positioned between the current collector and the solid electrolyte layer;
the chamfered portion is provided over the current collector and the active material layer; and
the insulating member covers the current collector and the active material layer at the chamfered portion.

7. The battery according to claim 6,
wherein the chamfered portion is provided over the current collector, the active material layer, and the solid electrolyte layer; and
the insulating member covers the current collector, the active material layer, and the solid electrolyte layer at the chamfered portion.

8. The battery according to any one of claims 1 to 7,
wherein the insulating member covers the chamfered portion to an outer side of an outer periphery of the chamfered portion.

9. The battery according to any one of claims 1 to 8,
wherein the insulating member is softer than the first electrode layer, the solid electrolyte layer, and the second electrode layer.

10. The battery according to any one of claims 1 to 9,
wherein the insulating member contains a resin.

11. The battery according to any one of claims 1 to 10,
wherein the insulating member includes a structure in which a plurality of insulating films are laminated on each other.

12. The battery according to claim 11,
wherein types of materials contained in each of the plurality of insulating films are different from each other.

13. The battery according to claim 11 or 12,
wherein respective hardnesses of the plurality of insulating films are determined such that an insulating film that is closer to the chamfered portion, among the plurality of insulating films, has a lower hardness.

14. The battery according to any one of claims 1 to 13,
wherein the power generating element includes a structure in which a plurality of unit cells are laminated on each other, the unit cells each including the first electrode layer, the solid electrolyte layer, and the second electrode layer.

15. The battery according to any one of claims 1 to 14,
wherein the solid electrolyte layer contains a solid electrolyte that has lithium ion conductivity.

16. A method of manufacturing a battery including
a power generating element that includes a first electrode layer, a second electrode layer, and a solid electrolyte layer positioned between the first electrode layer and the second electrode layer, and
an insulating member, the method comprising:
providing a chamfered portion at least in a part of corner portions of the power generating element; and
covering at least a part of the chamfered portion using the insulating member.
